Europäisches Patentamt

European Patent Office

Office européen des brevets

(19)

(11) Veröffentlichungsnummer : **0 044 963**
**B1**

(12) **EUROPÄISCHE PATENTSCHRIFT**

(45) Veröffentlichungstag der Patentschrift :
17.10.84

(51) Int. Cl.³ : **G 11 B 5/09// H04L1/10**

(21) Anmeldenummer : **81105126.7**

(22) Anmeldetag : **02.07.81**

(54) **Schaltungsanordnung zur Korrektur gestörter Abtastwerte bei einer PCM Übertragungseinrichtung, insbesondere einer Digital-Tonplatte.**

(30) Priorität : **24.07.80 DE 3028066**

(43) Veröffentlichungstag der Anmeldung :
**03.02.82 Patentblatt 82/05**

(45) Bekanntmachung des Hinweises auf die Patenterteilung : **17.10.84 Patentblatt 84/42**

(84) Benannte Vertragsstaaten :
**AT BE CH DE FR GB IT LI LU NL SE**

(56) Entgegenhaltungen :
**DE-A- 2 757 165**
**US-A- 3 544 963**
**US-A- 3 629 824**
**US-A- 4 003 020**
**IEEE TRANSACTIONS ON MAGNETICS, Band MAG-11, Nr. 5, September 1975, Seiten 1230-1233 New York, U.S.A. "Digital sound and television recording - The requirements of the signal"**
**JOURNAL OF THE AUDIO ENGINEERING SOCIETY, Band 21, Nr. 7, September 1973, Seiten 535-541 New York, U.S.A. H. IWAMURA et al.: "Pulse-Code-Modulation recording system"**

(73) Patentinhaber : **Licentia Patent-Verwaltungs-GmbH**
**Theodor-Stern-Kai 1**
**D-6000 Frankfurt/Main 70 (DE)**

(72) Erfinder : **Scholz, Werner, Dipl.-Ing.**
**Osterstrasse 20**
**D-3007 Gehrden (DE)**

(74) Vertreter : **Einsel, Robert, Dipl.-Ing.**
**Theodor-Stern-Kai 1**
**D-6000 Frankfurt/Main 70 (DE)**

EP 0 044 963 B1

**Beschreibung**

PCM Übertragungseinrichtungen gewährleisten im allgemeinen eine hohe Übertragungsgüte mit der Möglichkeit, gestörte Abtastwerte weitgehend wieder herzustellen. Nur bei einer reinen Datenübertragung ist allerdings eine sehr geringe Restfehlerwahrscheinlichkeit erforderlich. Bei PCM Tonübertragungseinrichtungen genügt es dagegen, Restfehler nur bis zu einem Grad herabzusetzen, daß sie auf der Wiedergabeseite nicht mehr hörbar sind.

Zur Datensicherung einer PCM-Übertragungsstrecke werden Verschachtelungsverfahren, Paritätsprüfungen und redundanzsteigernde Codes verwendet. Trotzdem noch verbleibende Restfehler können durch eine Interpolation zwischen ungestörten Abtastwerten noch derart abgeschwächt werden, daß sie in einer Wiedergabeeinrichtung nicht mehr bemerkbar sind.

Aus den technischen Informationen zur PCM 1 Audio Unit der Firma Sony (1978) ist eine Durchschnittswertinterpolation bekannt, bei der ein fehlerhaftes Wort durch den Durchschnittswert des vorhergehenden und des darauffolgenden Wortes ersetzt wird. Der Fehler wird daher so kompensiert, daß keine hörbare Differenz entsteht. Die nach diesem Verfahren erreichbare Kompensiermöglichkeit ist ein Fortschritt gegenüber dem Verfahren, bei dem als Ersatzt für das gestörte Datenwort das vorhergehende Datenwort eingesetzt wird.

Aus Electronics Weekly, 29.12.76/05.01.77 und der Patentschrift US-A-4 003 020 sind ebenfalls Verfahren zur Interpolation von gestörten Abtastwerten bekannt, bei denen zwischen zwei Punkten, zwischen denen ein Abtastwert gestört ist, eine Interpolation durchgeführt wird.

Die bekannten Verfahren versagen, wenn es darum geht, eine Interpolation zwischen Abtastwerten, zwischen denen mehr als ein gestörter Abtastwert liegt, durchzuführen. Zwei oder mehr aufeinanderfolgende gestörte Abtastwerte führen dann zu einem bemerkbaren Fehler auf der Wiedergabeseite.

Es ist daher Aufgabe der Erfindung, ein Verfahren und eine Schaltungsanordnung anzugeben, die es ermöglichen, eine Interpolation zwischen Abtastwerten durchzuführen, zwischen denen ein oder mehrere gestörte Abtastwerte liegen.

Die Erfindung wird durch die in den Ansprüchen 1 und 4 angegebenen Merkmale gelöst. Weiterbildungen der Erfindung sind in den Unteransprüchen beschrieben.

Durch die Erfindung wird es ermöglicht, eine lineare Interpolation mit bis zu vier Zwischenwerten zu zwei Stützwerten durchzuführen. Es können also vier gestörte aufeinanderfolgende Abtastwerte ersetzt werden, indem zwischen vor- und nachteilenden Stützwerten eine lineare Interpolation durchgeführt wird. Sind n Abtastwerte gestört, wobei in größer 4 ist, werden zunächst n − 4 der gestörten Abtastwerte durch den zuletzt richtigen Abtastwert ersetzt und die letzten vier gestörten Abtastwerte durch Interpolation zwischen dem letzten übertragenen Abtastwert und dem nachfolgenden ungestörten Abtastwert ermittelt.

Bei verhältnismäßig geringem Aufwand bietet die Schaltung hohe Reserven an Korrekturmöglichkeiten, so daß auch an Stellen großer Fehlerhäufigkeit eine gute Fehlerverdeckung gewährleistet ist. Die Schaltung arbeitet besonders vorteilhaft im analogen Bereich direkt hinter dem Digital/Analog-Wandler, in der das Signal als amplitudenrichtiges, aber noch wert- und zeitdiskretes Signal vorliegt. An die Interpolationsschaltung anschließend erfolgt die Aufhebung der Wert- und Zeitdiskretisierung in einem Tiefpaß.

Die Erfindung wird nachstehend an Hand eines Ausführungsbeispiels näher beschrieben. Es zeigen

Figur 1   einen Ausschnitt aus einer Signalverarbeitungsschaltung mit Interpolator,
Figur 2   ein Ausführungsbeispiel eines Interpolators nach der Erfindung,
Figur 3   ein Steuerdiagramm,
Figur 4   eine Darstellung zur Erklärung der Funktionsweise der Interpolationsschaltung,
Figur 5   eine Schaltungsanordnung zur Steuerung der Interpolationsschaltung,
Figur 6   ein Steuerdiagram der Schaltung nach Fig. 5,
Figur 7   eine Schaltung zur Interpolation bei Zweikanalübertragung (Stereo) und
Figur 8   ein Steuerdiagramm zur Fig. 7.

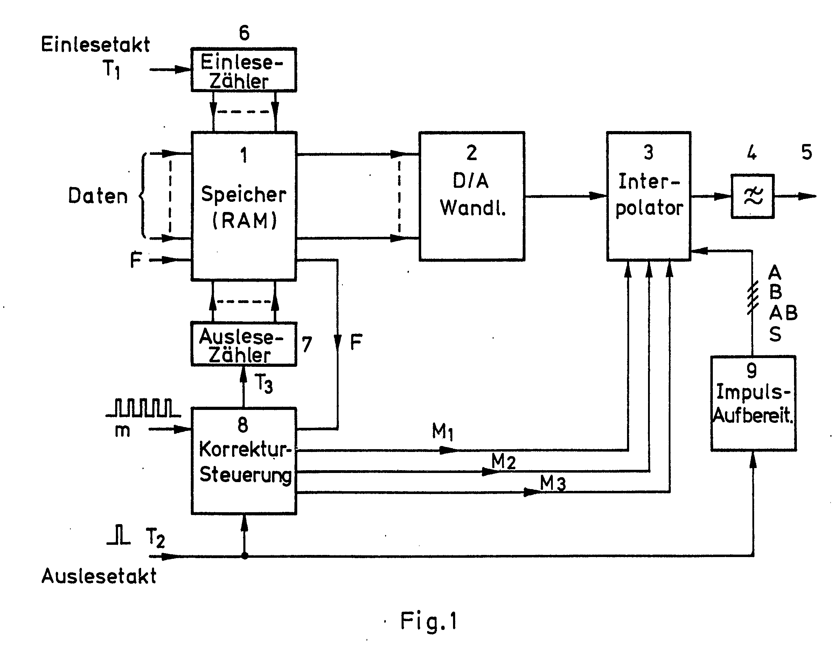

Fig. 1 zeigt einen Ausschnitt aus einer PCM Wiedergabeschaltung mit dem erfindungsgemäßen Interpolator. Die ankommenden Daten, die eventuell eine Fehlermarkierung besitzen können, laufen in einen Speicher 1, der z. B. als RAM ausgebildet ist. Alle nicht mit einer Fehlermarkierung versehenen Datenwörter werden vom Speicher 1 auf den Digital/Analog-Wandler 2 gegeben, von dem sie dem Interpolationsschaltkreis 3 zugeführt werden. An den Interpolationsschaltkreis 3 schließt sich das Tiefpaßfilter 4 an, von dem das Signal auf den Analogausgang 5 gegeben wird. Zur Steuerung des Ein- und Auslesens der Daten in oder aus dem Speicher 1 ist ein Einlesezähler 6, der von einem Einlesetakt $T_1$ getaktet wird, sowie ein Auslesezähler 7, der vom Takt $T_3$ gesteuert wird, vorgesehen. Fehlermarkierungen werden vom Speicher 1 auf einen Schaltkreis 8 zur Korrektursteuerung geführt. Dieser Schaltkreis 8, der vom Auslesetakt $T_2$ sowie von weiteren Taktsignalen m gesteuert wird, gibt Signalen $M_1$, $M_2$ und $M_3$ an den Interpolator 3 ab, der über den Auslesetakt $T_2$ und die Impulsaufbereitungsstufe 9 angesteuert wird.

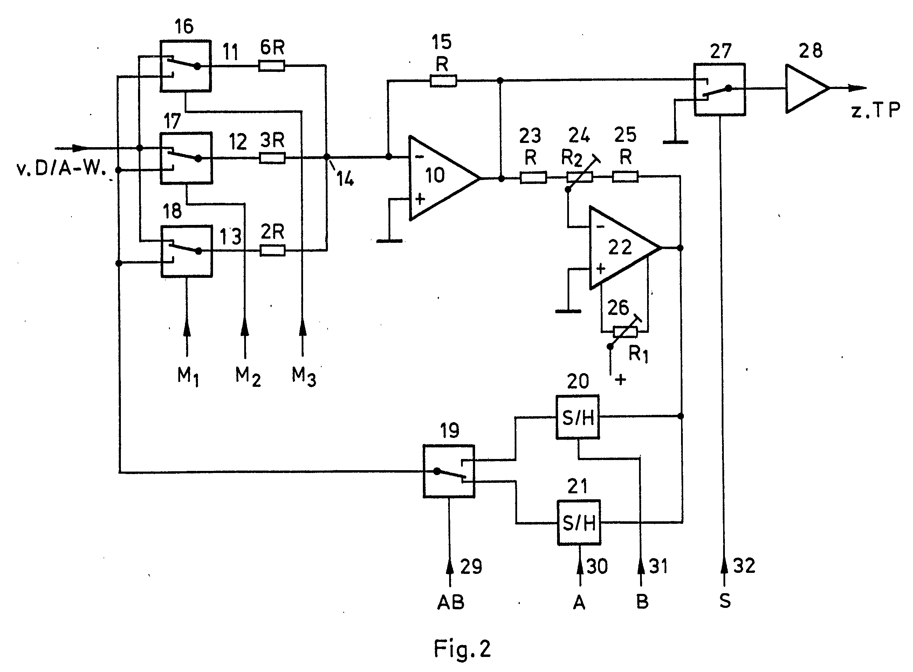

In Fig. 2 ist die Interpolationsschaltung 3 in einkanaliger Ausführung dargestellt. Die Schaltung enthält einen Summierverstärker 10 mit drei Eingängen 11, 12 und 13 unterschiedlicher Empfindlichkeit.

Die unterschiedliche Empfindlichkeit wird durch ein Widerstandsnetzwerk, bestehend aus den Widerständen 6R, 3R und 2R hergestellt. Die Widerstände sind am Punkt 14 zusammengeführt und am invertierenden, niederohmigen Eingang des Summierverstärkers 10 angeschlossen. Da die Werte der Widerstände 6R, 3R und 2R betragen, hat der Gesamtwiderstand, der sich aus der Parallelschaltung ergibt, den Wert R. Der Wert des Rückkopplungswiderstandes 15 des Summierverstärkers 10 beträgt ebenfalls in diesem Ausführungsbeispiel R. Dadurch ergibt die Gesamtverstärkung des Summierverstärkers-1. Die nicht am Summierverstärker 10 angeschlossenen Seiten der Widerstände 11 bis 13 sind je mit einem Umschalter 16, 17, 18 verbunden. Alle ersten Eingänge der Umschalter 16, 17, 18 sind verbunden und an den Ausgang des Digital/Analog-Wandlers 2 angeschlossen. Die zweiten Eingänge der Umschalter 16, 17, 18 sind ebenfalls verbunden und liegen an einem Umschalter 19, dessen beide Eingänge jeweils auf die Ausgänge der Sample and Hold Schaltungen 20 und 21 führen. Die Eingänge der Sample and Hold Schaltungen 20 und 21 liegen gemeinsam am Ausgang der Phasenumkehrstufe 22, die das vom Summierverstärker 10 kommende Signal in der Phase um 180° dreht. Durch das Widerstandsnetzwerk 23, 24, 25 ist die Verstärkung der Phasenumkehrstufe 22 einstellbar. Mit dem Potentiometer 26 ist eine Offseteinstellung möglich. Der Ausgang des Summierverstärkers 10 liegt außerdem am ersten Eingang eines Umschalters 27, von dem das Signal über einen Impedanzwandler 28 zum Tiefpaß 4 geführt wird. Der zweite Eingang des Umschalters liegt an Masse. Die Umschalter 16, 17, 18 werden durch die Signale $M_1$, $M_2$ und $M_3$ von der Korrektursteuerung 8 gesteuert. Zur Umschaltung des Umschalters 19 sind das Steuersignal AB, zur Taktung der Sample and Hold Schaltung 20 und 21 die Steuersignale A und B sowie zum Umschalten des Umschalters 27 das Steursignal S erforderlich.

Die Eingänge 11, 12, 13 der Summierverstärkers 10 verhalten sich in ihrer Empfindlichkeit wie 1 : 2 : 3. Wenn die drei Eingänge an der selben Spannungsquelle liegen, liefert der Eingang mit dem Widerstand 6R einen Stromanteil, der Eingang 11 mit dem Widerstand 3R zwei Stromanteile und der Eingang 13 mit dem Widerstand 2R drei Stromanteile. Die Sample and Hold Schaltungen 20 und 21 werden so im Gegentakt betrieben, daß jeweils eine der beiden Schaltungen den gerade vorhandenen Signalwert abtastet, während die zweite Schaltung den vorhergehenden Wert hält. Der mit dem Signal AB gesteuerte Umschalter 19 sorgt dafür, daß der jeweils gehaltene Wert der Sample and Hold Schaltungen 20 oder 21 an den zweiten Eingängen der drei Umschalter 16, 17, 18 liegt. Der Umschalter 27 ist eine Tastschaltung, die das Ausgangssignal in kurze Impulse verwandelt, ehe es über den Impedanzwandler 28 dem Tiefpaß 4 zugeführt wird.

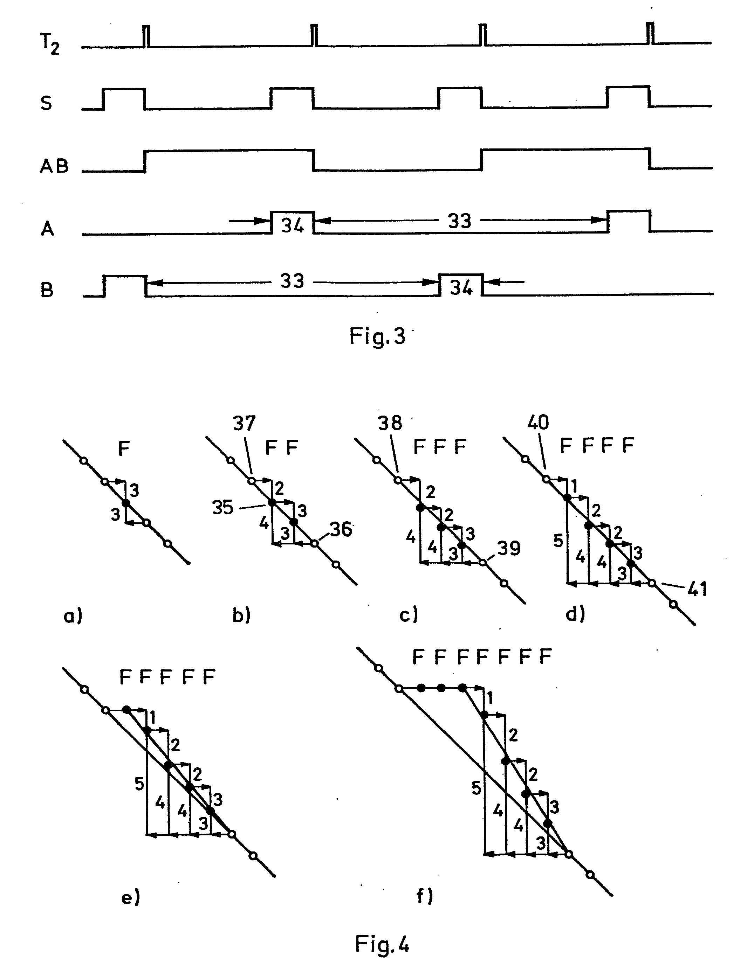

Die Steuersignale für die Tastschaltung 27, die beiden Sample and Hold Schaltungen 20 und 21 und den Umschalter 19 sind in Fig. 3 dargestellt. Aus dem Diagramm 4 und 5. Zeile ist ersichtlich, daß die Signale A und B versetzt, aber mit gleicher Frequenz die Sample and Hold Schaltungen 20 und 21 ansteuern. Während der Zeit 34 wird das an den Sample and Hold Schaltungen 20 und 21 ankommende Signal gesampelt, während der Zeit 33 gehalten. Während der Zeit des Haltens des einen Signals erfolgt die Umschaltung des Umschalters 19 auf dieses Signal entsprechend Fig. 3, 4 und 5. Zeile. Dies bewirkt, daß jeweils nur das gehaltene Signal der Sample and Hold Schaltungen 20 und 21 über den Umschalter 19 weiter gegeben wird.

Die Steuerspannungen für die drei Eingangsumschalter 16, 17, 18 werden in einer speziellen Korrektursteuerungsschaltung 8 erzeugt. Mit Hilfe dieser Eingangsumschalter werden die sechs dem Summierverstärkereingang 14 zugeführten Stromanteile je nach Interpolationserfordernissen teils dem Digital/Analog-Wandlerausgang, teils den Sample and Hold Schaltungen 20 und 21 entnommen, und zwar werden vorzugsweise folgende Zusammensetzungsverhältnisse in Abhängigkeit der Schaltstellungen der Umschalter 16, 17, 18 benutzt. Das Verhältnis der Stromanteile, die auf den Sumationspunkt 14 vom Analog/Digital-Wandler kommen, zu den Stromanteilen, die über dem Umschalter 19 von den Sample and Hold Schaltungen 20 und 21 kommen, verhält sich bei einer bestimmten Anzahl n aufeinanderfolgender mit Fehlermarkierung F versehenen Abtastwerten bis zum nächsten ungestörten Abtastwert entsprechend folgender Tabelle :

| n | Anteil v. D/A-Wandler | Anteil v. S & H |
|---|---|---|
| 0 | 6 | 0 |
| 1 | 3 | 3 |
| 2 | 2 | 4 |
| 3 | 2 | 4 |
| 4 | 1 | 5 |
| > 4 | 0 | 6 |

Je nachdem, wieviel Abtastwerte mit einer Fehlermarkierung versehen sind, wird das Schaltverhalten der Umschalter 16, 17, 18 eingestellt. Fig. 4 zeigt die Funktionsweise der Interpolation. In Fig. 4 sind ungestörte Abtastwerte als offene Kreise gekennzeichnet, gestörte Abtastwerte, die durch Interpolation ersetzt werden, als geschlossene Kreise. In Fig. 4a ist ein Wert zwischen zwei Stützwerten zu korrigieren. Entsprechend obenstehender Tabelle verhalten sich die Anteile des Stromes des Digital/Analog-Wandlers zum Anteil des von den Sample and Hold Schaltungen 20 und 21 kommenden Stromes für n = 1 wie 3 : 3. An den zweiten Eingängen der Umschalter 16, 17, 18 liegt jeweils der letzte ungestörte Abtastwert bzw.

3

# 0 044 963

interpolierte Abtastwert an, der von den Sample and Hold Schaltungen 20 und 21 kommt. Die Umschalter 16, 17, 18 werden also derart eingestellt, daß drei Anteile des folgenden Abtastwertes mit drei Anteilen des vorhergehenden Abtastwertes summiert werden, so daß der Mittelwert zwischen beiden Abtastwerten erhalten wird. Dies wird dadurch bewirkt, daß die Schalter 16 und 17 am Ausgang des Digital/Analog-Wandlers liegen, während der Schalter 18 am Ausgang der Sample and Hold Schaltungen 20 und 21 liegt. Die Parallelschaltung 6R und 3R gibt nämlich 2R, so daß 2R sich zu 2R wie 3 : 3 verhalten kann.

Fig. 4b zeigt die Funktionsweise der Interpolationsschaltung für zwei aufeinanderfolgende gestörte und zu korrigierende Abtastwerte. Um den ersten korrigierten Abtastwert 35 zu erhalten, werden die Umschalter 16, 17, 18 so eingestellt, daß zwei Anteile des kommenden Abtastwertes 36 vom Digital/Analog-Wandler und vier Anteile des in den Sample and Hold Schaltungen 20 oder 21 gespeicherten vorhergehenden Abtastwertes 37 zusammengefügt werden. Dazu liegen Schalter 16 und 18 an den Sample and Hold Schaltungen, während der Schalter 17 am Digital/Analog-Wandler anliegt. Die Parallelschaltung von 6R und 2R ergibt 1,5R, so daß das Widerstandsverhältnis 1,5R zu 3R = 2 : 4 beträgt. Diesem Widerstandsverhältnis entsprechen die in Fig. 4 angegebenen Abstandswerte. Das Verhältnis der Ströme ist umgekehrt. Es werden also von der Sample and Hold-Schaltung 4 Stromanteile und vom Digital/Analog-Wandler 2 Stromanteile geliefert. Zur Korrektur des nächsten gestörten Abtastwertes bleibt der nächste ungestörte Abtastwert 35 am Digital/Analog-Wandler-Ausgang liegen, und es wird das Spannungsverhältnis dieses Abtastwertes zum soeben korrigierten Abtastwert eingestellt. Es ist dazu das Verhältnis 3 : 3 erforderlich, das durch Anschaltung der Schalter 16 und 17 an den Ausgang des Digital/Analog-Wandlers sowie durch Schaltung des Schalters 18 an den Ausgang der Sample and Hold Schaltungen 20 und 21 erreicht wird. Die Parallelschaltung der Widerstände 6R und 3R ergibt 2R, so daß das Gesamtverhältnis sich wie 3 : 3 verhält.

Zur Ermittlung eines Interpolationswertes ist daher die Kenntnis des vorhergehenden und des nächstfolgenden ungestörten Abtastwertes erforderlich. Es ist notwendig, den nächstfolgenden ungestörten Abtastwert für die Zeit am Digital/Analog-Wandler solange anliegen zu lassen, bis alle zu interpolierenden Werte ermittelt sind. Das den Abtastwerten eventuell anhängende Fehlersignal F bewirkt in dem Korrektursteuerschaltkreis 8, daß der Auslesezähler 7, der die Ausleseadressen für den Speicher 1 weiterschaltet, die am Ausgang des Speichers 1 anliegenden Daten so schnell weiterschaltet, daß der nächstfolgende ungestörte Abtastwert am Ausgang des Speichers 1 bzw. des Digital/Analog-Wandlers 2 anliegt, bevor der nächste zu interpolierende Wert zu errechnen ist.

Fig. 4c und Fig. 4d zeigen die Ermittlung der zu interpolierenden Zwischenwerte zwischen zwei ungestörten Abtastwerten 38 und 39 bzw. 40 und 41. Mit der erfindungsgemäßen Interpolationsschaltung ist es also möglich, bis zu vier Zwischenwerte zwischen ungestörten Abtastwerten annähernd linear zu interpolieren. Die Interpolation ist für drei und vier Zwischenwerte zwar nur annähernd linear, da durch die Verwendung von nur drei Eingängen mit unterschiedlicher Empfindlichkeit am Summierverstärker 10 nur eine begrenzte Zahl von Kombinationsmöglichkeiten zu erreichen ist. Da eine Interpolation ohnehin nur den angenäherten Verlauf einer Signalkurve ersetzen kann, ist eine nicht ganz lineare Interpolation nicht weiter störend.

In der Art und Weise, wie die zu interpolierenden Werte ermittelt werden, liegt noch ein weiterer Vorteil. Die Berechnung der zu ersetzenden Werte erfolgt jeweils aus den den vorhergehenden ungestörten bzw. interpolierten Abtastwerten und dem folgenden ungestörten Abtastwert. Die interpolierten Werte orientieren sich daher an dem nächsten ungestörten Abtastwert und die Verbindungslinie zum ungestörten nächsten Abtastwert schließt sich daher an den weiteren Verlauf der Abtastwerte an.

Die Schaltung ist auch in der Lage, mehr als vier gestörte Abtastwerte zu ersetzen. Jedoch erfolgt hier die Interpolation nicht zwischen dem letzten ungestörten oder korrigierten Abtastwert und dem folgenden ungestörten Abtastwert, sondern der letzte ungestörte Abtastwert wird zunächst solange auf den Ausgang gegeben, bis nur noch ein Abstand von vier Abtastwerten zum nächsten ungestörten Abtastwert vorliegt. Der zuletzt richtige Abtastwert wird daher zunächst gehalten, und dann erfolgt zwischen diesem Abtastwert und dem nächstfolgenden ungestörten Abtastwert eine annähernd lineare Interpolation.

Die nachfolgende Tabelle gibt an, welche Steuersignale $M_1$, $M_2$ und $M_3$ zur Steuerung der Umschalter 16, 17, 18 erforderlich sind.

| Anzahl der Fehlerstellen | Anteile Digital/ Analog-Wandler | Anteile Speicher S & H | $M_1$ | $M_2$ | $M_3$ |
|---|---|---|---|---|---|
| n = 0 | 6 | 0 | 0 | 0 | 0 |
| n = 1 | 3 | 3 | 1 | 0 | 0 |
| n = 2 | 2 | 4 | 1 | 0 | 1 |
| n = 3 | 2 | 4 | 1 | 0 | 1 |
| n = 4 | 1 | 5 | 1 | 1 | 0 |
| n = 5 | 0 | 6 | 1 | 1 | 1 |
| n > 4 | 0 | 6 | 1 | 1 | 1 |

Die Schalter 16, 17, 18 werden entsprechend obiger Tabelle so eingestellt, daß jeweils die Zeile für die noch zu korrigierenden Abtastwerte benutzt wird. Die Interpolation wird also Punkt für Punkt zwischen dem jeweils letzten Ausgangswert der Interpolationsschaltung vorgenommen. Die vom Speicher 1 auf den Digital/Analog-Wandler gegebenen Abtastwerte werden nur dann verwendet, wenn keine Fehlermarkierung F vorliegt. Zwischen zwei Auswertungsintervallen des Digital/Analog-Wandlers können außer dem jeweils nächsten Abtastwert bis zu fünf weitere im Speicher 1 gespeicherte Abtastwerte auf Fehlermarkierung überprüft werden. Haben mehr als vier aufeinanderfolgende Werte eine Fehlermarkierung, so wird der letzte Ausgangswert der Interpolationsschaltung als Ausgangssignal beibehalten, und zwar so lange, bis im Abstand von vier Abtastintervallen wieder ein fehlerfreier Abtastwert zur Verfügung steht. Der hieraus ermittelte Analogwert wird dann bei den nächsten vier Interpolationsvorgängen als Stützwert verwendet, während als zweiter Stützwert der jeweils vorhergehende Ausgangswert der Interpolationsschaltung dient. Mit der erfindungsgemäßen Schaltung werden ein oder zwei fehlende Werte exakt durch lineare Interpolation ersetzt. Bei drei und vier aufeinanderfolgenden Fehlern ist die Interpolation angenähert linear.

An die Phasenumkehrstufe 22 ist ein Offseteinsteller 26 und ein Verstärkungseinsteller 24 angeschlossen. Dadurch kann für die Bildung optimaler Ersatzwerte bei der Interpolation ein Abgleich auf folgende Weise mit Hilfe der Einstellregler 24 und 26 durchgeführt werden. Durch Verwendung eines stark gestörten PCM-Signals (künstliche Störungen) wird zunächst dafür gesorgt, daß alle drei Umschalter 16, 17 und 18 ständig betätigt sind. Dann wird bei einem Tonpegel 0 mit Hilfe des Einstellreglers 26 die Offsetspannung der Phasenumkehrstufe 22 so eingestellt, daß beim Ein- und Ausschalten der künstlichen Störungen ein möglichst geringer Unterschied im Geräusch am Ausgang wahrnehmbar ist. Die Einstellung des Reglers 24 erfolgt nach der gleichen Methode, nur wird diesmal ein Sinuston von z. B. 800 Hz und mittlerem Pegel verwendet. Mit Hilfe des Einstellers 24 wird dann die Verstärkung des Phasenumkehrverstärkers 22 so eingestellt, daß mit und ohne künstliche Störungen möglichst kein Unterschied im Ausgangssignal mehr wahrnehmbar ist. Durch diese beiden einfachen nach Gehör oder mit Hilfe von Instrumenten durchführbaren Abgleichvorgänge ist die optimale Fehlerverdeckung sichergestellt.

Am Speicher 1 in Fig. 1, der hier als Parallelspeicher dargestellt ist, kommen die einzelnen Datenwörter parallel an und werden zunächst im Speicher abgelegt. X Bits eines Datenwortes bzw. Abtastwertes mit einem zusätzlichen Bit für die Fehlermarkierung F von $x + 1$ parallelen Leitungen können aufgenommen und an $x + 1$ parallele Leitungen wieder abgegeben werden. Die Daten können entweder in verschachtelter Reihenfolge dem Speicher zugeführt werden, wobei die Entschachtelung dann im Speicher erfolgt, oder die Daten werden bereits in entschachtelter Anordnung in der ursprünglichen Reihenfolge in den Speicher eingeschrieben. Einlesezähler 6 und Auslesezähler 7 sind so aufeinander abgestimmt, daß das Auslesen in entschachtelter Form erfolgt, das heißt in der ursprünglichen Reihenfolge der Abtastwerte. Der Einlesetakt $T_1$, der den Einlesezähler 6 steuert, ist mit dem ankommenden Signal verkoppelt. Er enthält also auch dessen Zeitfehler. Das Auslesen erfolgt mit dem konstanten Auslesetakt $T_2$, so daß die Zeitfehler beseitigt werden. Die mittlere Frequenz von $T_1$ muß natürlich mit der von $T_2$ übereinstimmen, und die Speicherkapazität muß so groß sein, daß nicht nur die Zeit-Schwankungen von $T_1$ aufgefangen werden, sondern daß auch immer genügend Werte für die Interpolation verfügbar sind.

Die mit einer Fehlermarkierung F versehenen Abtastwerte sind nicht brauchbar. In einfachen PCM-Übertraungssystemen sind das z. B. alle Abtastwerte aus als fehlerhaft erkannten Blöcken. Bei Systemen, in denen auch Paritätssignale zur Durchführung einer echten Korrektur des Digitalsignals übertragen werden, kann es an Stellen hoher Fehlerdichte vorkommen, daß diese Korrektur nicht durchführbar ist. Diese verbleibenden Fehler können nur durch Interpolation verdeckt werden. Der am Auslesezähler 7 anliegende Auslesetakt $T_3$ sorgt dafür, daß der nächste Abtastwert der ursprünglichen Reihenfolge einschließlich Fehlermarkierungsbit an den Speicherausgängen des Speichers 1 zur Verfügung gestellt wird. Die x Bits des Datenwortes werden dann dem Digital/Analog-Wandler zugeführt, dessen Ausgang sich auf den zugehörigen Analogwert einstellt. Am Ausgang des Digital/Analog-Wandlers liegen die Abtastwerte dann immer noch in zeit- und wertdiskreter Form vor. Das Fehlermarkierungsbit, das gestörten Datenwörtern anhängt, wird der Korrektursteuerung 8 zugeführt.

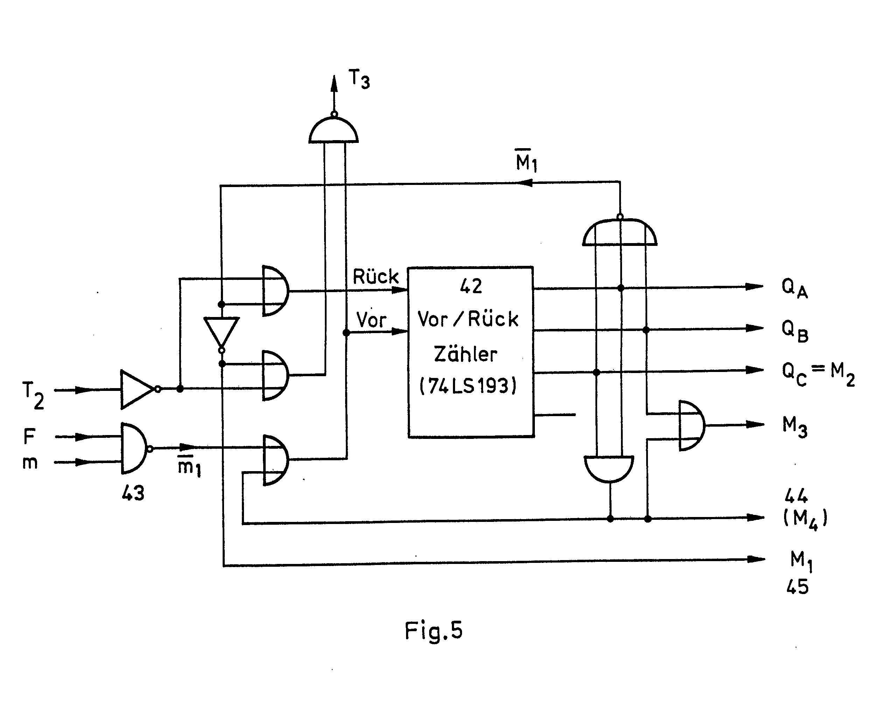

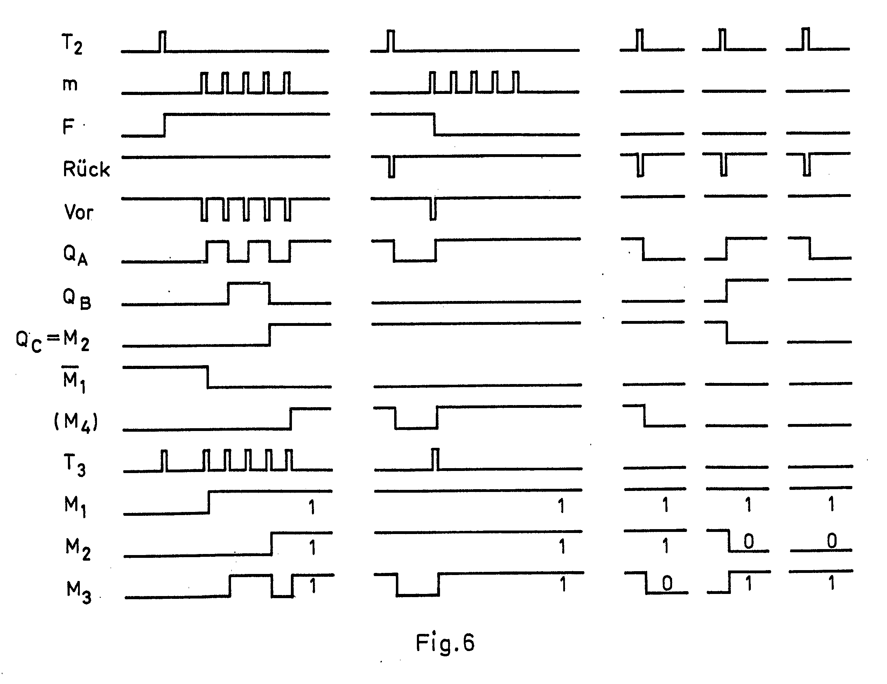

In Fig. 5 ist eine Schaltung der Korrektursteuerung 8 dargestellt. Das entsprechende Impulsdiagramm dazu zeigt Fig. 6. Jeder Impuls $T_2$ leitet ein neues Abtastintervall ein. Sofern keine Fehlermarkierung vorliegt und der Vor-Rückzähler 42 sich in seiner Ausgangslage befindet, das heißt $M_1 = 0$, wird jeder Impuls $T_2$ als Impuls $T_3$ auf den Auslesezähler 7 weitergeleitet, so daß in ununterbrochener richtiger Reihenfolge die Daten dem Digital/Analog-Wandler zugeführt werden. Durch die Steuersignale $M_1 = M_2 = M_3 = 0$ ist der Eingang des Interpolators auf den Digital/Analog-Wandler-Ausgang geschaltet. Das störungefreie Signal passiert also unbeeinflußt den Interpolator.

Solange eine Fehlermarkierung F vorliegt, können kurz nach jedem $T_2$ Impuls bis zu 5 m-Impulse das Eingangsgatter 43 passieren. Diese Impulse werden in Vor-Rück-Zähler 42 bis zum Erreichen des Wertes 5 vorwärtsgezählt. Ausgang $M_4$ geht bei Erreichen des Zählerstandes 5 auf logisch 1. Außerdem gelangen die m-Impulse als Impulse $T_3$ auf den Auslesezähler 7. Der Auslesezähler 7 kann also nun bis zu 5 Zähleinheiten seinem Sollstand vorauseilen und damit einen um bis 5 Abtastintervalle früheren Abtastwert auf Fehlermarkierung kontrollieren. Die in Fig. 6 erste Spalte dargestellten Spannungsverläufe treten bei den ersten 5 aufeinanderfolgenden Abtastintervallen auf, wenn nach einer fehlerfreien Zeit plötzlich 6 aufeinanderfolgende Werte eine Fehlermarkierung F besitzen. Entsprechend Fig. 6 erste Spalte schaltet der Impuls $T_2$ bzw. $T_3$ den Auslesezähler 7 einen Schritt weiter. Dadurch wird eine Adresse erreicht, die eine Fehlermarkierung F enthält. Da der Vor-Rück-Zähler 42 in seiner Ausgangsposition steht und auch die nächsten 5 Adressen Fehlermarkierungen enthalten, schaltet die Höchstzahl von 5m-Impulsen sowohl den Vor-Rück-Zähler 42 als auch den Auslesezähler 7 um fünf Schritte weiter. Da kein Wert ohne Fehlermarkierung gefunden wurde, mußte der Interpolator den vorhergehenden Ausgangswert wieder verwenden. Das geschieht dadurch, daß die Steuersignale $M_1 = M_2 = M_3 = 1$ sind, so daß der Eingang des Summierverstärkers 10 auf den Ausgang der Sample and Hold Schaltungen 20 oder 21 gelegt ist. Das Vorwärtsschalten des Vor-Rück-Zählers 42 muß innerhalb des Intervalls erfolgen, das zwischen der Auswertung von zwei Abtastwerten liegt. Wenn der Vor-Rück-Zähler 42 sich nicht in seiner Nullposition befindet, liegt am Ausgang 45 logisch 1 an. Solange dies der Fall ist, gelangt der Impuls $T_2$ nicht auf den Auslesezähler 7, sondern dient als Rückzählimpuls für den Vor-Rück-Zähler 42.

In Spalte 2 von Fig. 6 verläßt also der Vor-Rück-Zähler 42 durch den $T_2$ Impuls zunächst seinen Endwert 5 (Ausgang $M_4$ = logisch 0). Da außerdem die Fehlermarkierung F vom vorhergehenden Werd noch ansteht, kann der erste m-Impuls den Auslesezähler einen Schritt weiterschalten ($T_3$), gleichzeitig geht der Vor-Rück-Zähler 42 wieder in seine Endposition (Ausgang $M_4$ = logisch 1). Die nun aufgesuchte Adresse im Speicher 1 besitzt keine Fehlermarkierung (F = 0). Da der Abstand vom derzeitigen Abtastwert nach wie vor mehr als vier Abtastintervalle beträgt, muß auch hier der vorhergehende Ausgangswert gehalten werden. $M_1 = M_2 = M_3 = 1$ bleiben also erhalten. Erst mit dem nächsten Abtastintervall kann die eigentliche Interpolation beginnen. Der Auslesezähler bleibt auf der nicht fehlermarkierten Adresse, bis diese erreicht wird. Die Signale $M_1$, $M_2$, $M_3$ folgen bis dahin dem aufgrund obenstehender Tabelle erforderlichen Verlauf. Sobald der Vor-Rück-Zähler 42 durch Rückwärtszählung seine Nullposition erreicht hat, weiß die Schaltung, daß die Vorauszählung des Auslesezählers 7 zwecks Auffinden einer Adresse ohne Fehlermarkierung wieder aufgeholt ist. Der nächste $T_2$ Impuls wird also wieder dem Auslesezähler zugeführt und je nach dem, ob eine Adresse mit oder ohne Fehlermarkierung erreicht wird, laufen erneut die bereits beschriebenen Vorgänge ab.

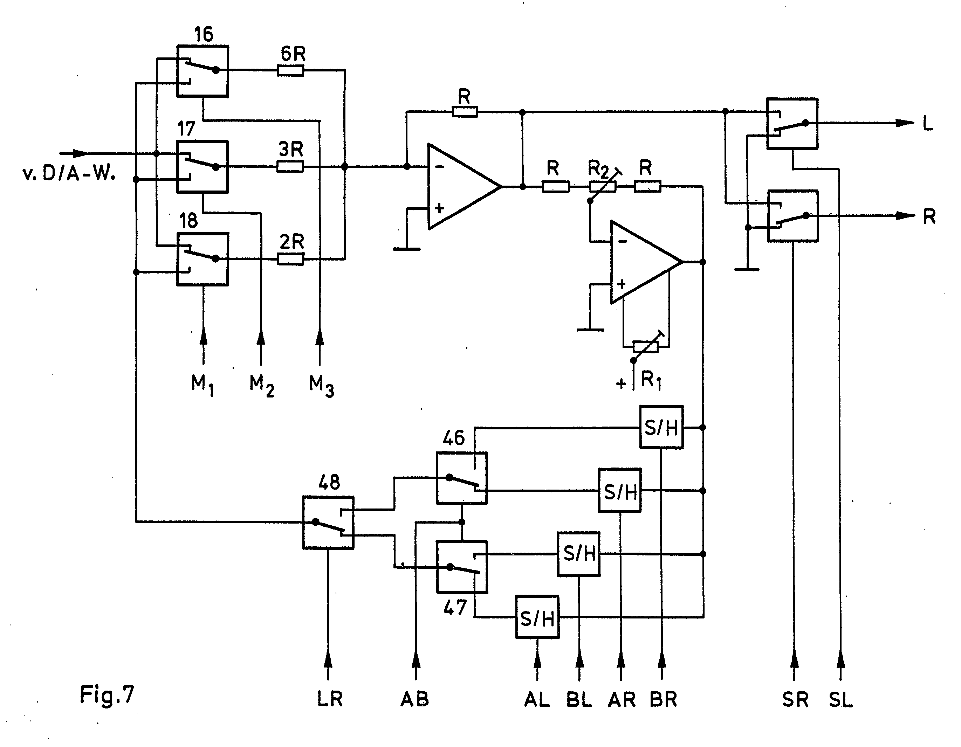

In Fig. 7 ist die Interpolationsschaltung in Zweikanalausführung dargestellt, z. B. für einen linken und einen rechten Stereokanal. Vom Speicher 1 bzw. Digital/Analog-Wandler werden abwechselnd linke und rechte Abtastwerte geliefert. Da pro Kanal zwei Sample and Hold Schaltungen erforderlich sind, deren Haltewerte auf die Umschalter 46 und 47 gegeben werden, ist ein weiterer Umschalter 48 erforderlich, der die zweiten Eingänge der Umschalter 16, 17, 18 abwechselnd auf die Umschalter 46 und 47 legt, die abwechselnd jeweils auf eine Sample and Hold Schaltung gelegt werden.

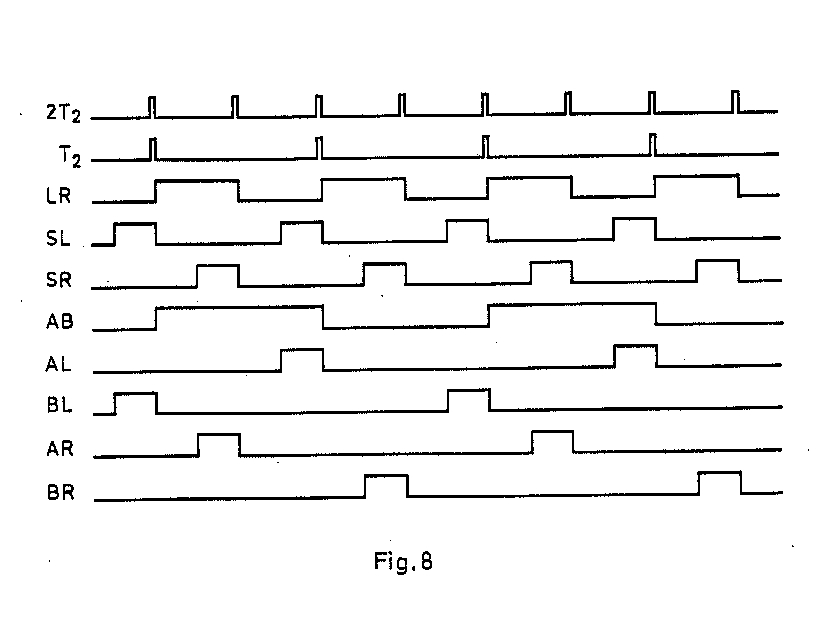

Fig. 8 zeigt die für die Signalverarbeitung in Fig. 7 erforderlichen Steuerspannungen. Die für die Steuerung der Schalter 16, 17, 18 erforderlichen Signale $M_1$, $M_2$, $M_3$ können auch hier in der Schaltung gemäß Fig. 5 erzeugt werden. Es ist nur zu berücksichtigen, daß die in Fig. 6 dargestellten Spannungsverläufe jeweils für ein Wertepaar links und rechts gelten. Die Umschaltung vom linken auf den rechten Abtastwert kann z. B. jeweils in der Mitte zwischen zwei $T_2$ Impulsen durch eine Umschaltung des Auslesezählers 7 erfolgen. Entsprechend läßt sich eine Erweiterung auf ein 4-Kanal-System anwenden.

Bei verhältnismäßig geringem Aufwand bietet die Schaltung hohe Reserven an Korrekturmöglichkeit, so daß auch an Stellen großer Fehlerhäufigkeit eine gute Fehlerverdeckung gewährleistet ist, ohne daß nicht kontrollierbare Signale entstehen. Die Schaltung gestattet es, exakt bis zu zwei Zwischenwerte linear zu interpolieren, bis zu vier Zwischenwerte annähernd linear zu interpolieren und mehr als vier Zwischenwerte in einer Weise zu korrigieren, daß bei n zu korrigierenden Werten die ersten n − 4 Werte dem vorhergehenden Abtastwert entsprechen, und die letzten vier Werte vor einem neuen Abtastwert annähernd linear mit dem ersten wieder ungestörten Abtastwert interpoliert werden. Ein Beibehalten des letzten ungestörten Abtastwertes während einer Störungsperiode von längerer Dauer ist immer noch störungsfreier als ein Freilaufen der Signale. Dieser Ersatzwert liegt auf jeden Fall im Amplitudenbereich des gerade vorhandenen Signals. Es wird also mit Sicherheit verhindert, daß in einer sehr leisen Passage plötzlich ein lautes Knackgeräusch auftritt. Die gesamte Korrekturschaltung ist zweckmäßig in Form eines integrierten Schaltkreises aufzubauen, der außer den Signalein- und ausgängen eventuell die Anschlüsse für zwei Einsteller zu Offset- und Verstärkungseinstellung aufweist.

## Ansprüche

1. Verfahren zur Korrektur gestörter Abtastwerte bei einer PCM-Übertragungseinrichtung, insbesondere einer Digitaltonplatte, bei der gestörte Abtastwerte durch eine lineare Interpolation zwischen vor- und nacheilenden benachbarten Abtastwerten korrigiert werden, dadurch gekennzeichnet, daß

a) bei Vorliegen von nur wenigen (N ≤ n) zeitlich hintereinanderliegenden gestörten Abtastwerten diese durch Gewichtung des vorhergehenden ungestörten Abtastwertes (37, 38, 40) oder des vorhergehenden korrigierten Abtastwertes (35) und des nächstfolgenden ungestörten Abtastwertes (36, 39, 41) und anschließender Kombination der gewichteten ungestörten Abtastwerte so ersetzt werden, daß eine annähernd lineare Interpolation für maximal n zeitlich hintereinanderliegender gestörte Abtastwerte zwischen den ungestörten Abtastwerten erreicht wird (Figuren 4a bis 4d), und

b) bei Vorliegen von weiteren (N > n) zeitlich hintereinanderliegenden gestörten Abtastwerten die ersten (N − n) gestörten Abtastwerte durch den zuletzt ungestörten Abtastwert, der bei längeren Störfolgen auch gegen Null abklingen kann, und die restlichen (n) Abtastwerte durch eine annähernd lineare Interpolation zwischen dem zuletzt korrigierten Abtastwert und dem nächstfolgenden ungestörten Abtastwert nach Verfahrensschritt a) ersetzt werden (Figuren 4e und 4f).

2. Verfahren nach Anspruch 1, dadurch gekennzeichnet, daß eine den Datenwörtern der gestörten Abtastwerte anhängende Fehlermarkierung (F) einer Korrektursteuerungsschaltung (8) zugeführt wird, die in Abhängigkeit von der Zahl aufeinanderfolgenden Fehlermarkierungen (F) Steuersignale ($M_1$, $M_2$, $M_3$) zur Einstellung der Wichtung der Abtastwerte an die einzelnen Eingänge eines Summierverstärkers (10) abgibt, welche unterschiedliche Empfindlichkeit besitzen (Figuren 1 und 2).

3. Verfahren nach Anspruch 1, dadurch gekennzeichnet, daß maximal 4 (n = 4) zeitlich hintereinanderliegende gestörte Abtastwerte gemäß Verfahrensschnitt a) ersetzt werden können.

4. Schaltungsanordnung zur Durchführung des Verfahrens nach Anspruch 1 bei einer PCM-Übertragungseinrichtung, dadurch gekennzeichnet, daß die Interpolation in dem Bereich der Wiedergabeeinrichtung der PCM-Übertragungseinrichtung vorgenommen wird, in dem die Abtastwerte zeitdiskret als Amplitudenwerte vorliegen.

5. Schaltungsanordnung zur Durchführung des Verfahrens nach Anspruch 1, dadurch gekennzeichnet, daß die Kombination des vorhergehenden und nächstfolgenden ungestörten Abtastwertes in einem Summierverstärker (10) erfolgt, an dessen Eingänge unterschiedlicher Empfindlichkeit (11, 12, 13) wahlweise der vorhergehende und der nächstfolgende ungestörte Abtastwert angelegt werden.

6. Schaltungsanordnung nach Anspruch 5, dadurch gekennzeichnet, daß der Summierverstärker (10) drei Eingänge aufweist, deren Empfindlichkeiten sich wie 1 : 2 : 3 verhalten.

7. Schaltungsanordnung nach Anspruch 5, dadurch gekennzeichnet, daß der Summierverstärker (10) einen Operationsverstärker enthält, dessen invertierender Eingang über drei Widerstände mit den Werten 2R, 3R, 6R, mit den drei Eingängen unterschiedlicher Empfindlichkeit verbunden ist.

8. Schaltungsanordnung nach Anspruch 7, dadurch gekennzeichnet, daß der Rückkopplungswiderstand (15) des Operationsverstärkers R beträgt, so daß bei Parallelschaltung der Widerstände 2R, 3R und 6R die Gesamtverstärkung des Summierverstärkers − 1 beträgt.

9. Schaltungsanordnung zur Durchführung des Verfahrens nach Anspruch 1, dadurch gekennzeichnet, daß der jeweils letzte Abtastwert, der entweder der letzte ungestörte Abtastwert oder der zuletzt korrigierte Abtastwert ist, auf einen ersten Speicher (20, 21) gegeben wird, so daß er während des folgenden Abtastintervalls verfügbar ist.

10. Schaltungsanordnung nach Anspruch 9, dadurch gekennzeichnet, daß der erste Speicher (20, 21) aus einer Parallelschaltung zweier Sample and Hold Bausteine gebildet ist, die im Gegantakt betrieben werden.

11. Schaltungsanordnung nach den Ansprüchen 5 und 9, dadurch gekennzeichnet, daß zwischen dem Summierverstärker (10) und dem ersten Speicher (20, 21) eine Phasenumkehrstufe (22) mit einstellbarer Verstärkung (24) und Offseteinstellung (26) vorhanden ist.

12. Schaltungsanordnung nach Anspruch 5, dadurch gekennzeichnet, daß den Eingängen unterschiedlicher Empfindlichkeit Umschalter (16, 17, 18) vorgeschaltet sind, an deren jeweils ersten Eingang der nächste ungestörte Abtastwert anliegt, und an deren jeweils zweiten Eingang der vom ersten Speicher (20, 21) kommende letzte Abtastwert anliegt.

13. Schaltungsanordnung nach Anspruch 12, dadurch gekennzeichnet, daß der nächste ungestörte Abtastwert, gegebenenfalls über einen Digital/Analog-Wandler, einem zweiten Speicher (1) entnommen ist, der derart gesteuert ist, daß nach Möglichkeit ein ungestörtes Datenwort an seinem Ausgang vorliegt.

14. Schaltungsanordnung nach Anspruch 13, dadurch gekennzeichnet, daß die den Abtastwerten entsprechenden Datenwörter mit einem Einlesetakt ($T_1$) in den zweiten Speicher (1) eingelesen werden und mit einem Auslesetakt ($T_3$) an den Ausgang des zweiten Speichers (1) gelegt werden, wobei der Auslesetakt durch eventuell vorhandene Fehlermarkierungen (F) der einzelnen Datenwörter derart gesteuert ist, daß beim Auftreten gestörter Daten der zweite Speicher (1) solange weitergeschaltet wird, bis am Ausgang des zweiten Speichers (1) ein ungestörtes Datenwort vorliegt, oder eine vorgegebene maximale Anzahl von Weiterschaltungen erreicht ist.

15. Schaltungsanordnung zur Durchführung des Verfahrens nach Anspruch 2, dadurch gekennzeichnet, daß die Steuersignale ($M_1$, $M_2$, $M_3$) Umschalter (16, 17, 18) derart steuern, daß die Wichtungsverhältnisse der an den Umschaltern (16, 17, 18) anliegenden Abtastwerte sich wie 0 : 6, 1 : 5, 2 : 4, 3 : 3, 4 : 2, 5 : 1 oder 6 : 0 verhalten.

16. Schaltungsanordnung nach Anspruch 15, dadurch gekennzeichnet, daß das Verhältnis des Anteils des nächstfolgenden ungestörten Abtastwertes zum Anteil des letzten Abtastwertes sich bei einem störbehafteten Abtastwert wie 3 : 3, bei zwei gestörten Abtastwerten für den ersten gestörten Abtastwert wie 2 : 4, für den zweiten gestörten Abtastwert wie 3 : 3, bei drei gestörten Abtastwerten für den ersten gestörten Abtastwert wie 2 : 4, für den zweiten gestörten Abtastwert wie 2 : 4 und für den dritten gestörten Abtastwert wie 3 : 3, bei vier gestörten Abtastwerten für den ersten gestörten Abtastwert wie 1 : 5, für den zweiten gestörten Abtastwert wie 2 : 4, für den dritten gestörten Abtastwert wie 2 : 4 und für den vierten gestörten Abtastwert wie 3 : 3 verhält.

17. Schaltungsanordnung zur Durchführung des Verfahrens nach Anspruch 2, dadurch gekenn-

**0 044 963**

zeichnet, daß ein Vor-Rück-Zähler (42) vorhanden ist, der die Zahl der gestörten Datenworte zählt und in Abhängigkeit von der Zahl der noch zu korrigierenden Abtastwerte, gegebenenfalls über Gatter die Steuersignale ($M_1$, $M_2$, $M_3$) zur Umschaltung von Umschaltern (16, 17, 18) abgibt.

18. Schaltungsanordnung nach Anspruch 13, dadurch gekennzeichnet, daß zur Ermittlung des nächsten ungestörten Datenwortes ein Steuersignal ($T_3$) zur Weiterschaltung des zweiten Speichers (1) um so viele Stellen abgegeben wird, wie aufeinanderfolgende gestörte Datenworte vorhanden sind, wobei maximal 4 aufeinanderfolgende gestörte Datenworte berücksichtigt werden, und wobei die Weiterschaltung des zweiten Speichers (1) maximal in einer Zeit erfolgt, die zwischen zwei auf den Ausgang zu gebenden Abtastwerten liegt.

19. Schaltungsanordnung zur Durchführung des Verfahrens nach Anspruch 1, dadurch gekennzeichnet, daß die beiden Abtastwerte des rechten und linken Kanals eines stereophonen Signals ein Datenwort bilden.

20. Schaltungsanordnung nach Anspruch 19, dadurch gekennzeichnet, daß zwei Stereosignale zu einem Quadrosignal zusammengefaßt sind.

21. Schaltungsanordnung nach den Ansprüchen 10 und 19, dadurch gekennzeichnet, daß zur Verarbeitung eines Stereosignals zwei Speicher mit jeweils zwei Sample and Hold Schaltungen (20, 21) im Multiplexbetrieb zusammengefaßt sind.

22. Schaltungsanordnung nach den Ansprüchen 2 und 9, dadurch gekennzeichnet, daß Korrekturschaltung (8), erster Speicher (20, 21) und Summierverstärker (10) in einem gemeinsamen integrierten Schaltkreis vereinigt sind.

23. Schaltungsanordnung nach Anspruch 22, dadurch gekennzeichnet, daß der integrierte Schaltkreis in CCD-Technik ausgeführt ist.

**Claims**

1. Process for the correction of distorted sample values in a PCM transmitting arrangement, especially a digital sound record, in which distorted sample values are corrected by means of a linear interpolation between neighbouring preceding and succeeding sample values, characterized in that

a) on the occurrence of only a small number ($N \leqslant n$) of successive distorted sample values, the same are replaced by weighting of the preceding undistorted sample value (37, 38, 40) or of the preceding corrected sample value (35) and the next following undistorted sample value (36, 39, 41) and by additive combination of the weighted undistorted sample values, in such a way that an approximately linear interpolation is achieved between the undistorted sample values for at most n successive distorted sample values (Figures 4a to 4d) ;

b) on the occurrence of a greater number ($N > n$) of successive distorted sample values, the first ($N - n$) distorted sample values are replaced by the last undistorted sample value, which in the case of longer sequences of distortion can also decline toward zero, and the remaining (n) sample values are replaced by an approximately linear interpolation between the last corrected sample value and the next following undistorted sample value, according to process step a) (Figures 4e and 4f).

2. Process according to Claim 1, characterized in that, an error marker (F) added to the data words of the distorted sample values is applied to a correcting control circuit (8), which in dependence on the number of successive error markers (F) delivers control signals ($M_1$, $M_2$, $M_3$) for the purpose of establishing the weighting of the sample values at the individual inputs of a summing amplifier (10) which have different sensitivities (Figures 1 and 2).

3. Process according to Claim 1, characterized in that, at most 4 (n = 4) successive distorted sample values can be replaced in accordance with process step a).

4. Circuit arrangement for carrying out the process according to Claim 1 in a PCM transmitting arrangement, characterized in that the interpolation is undertaken in that section of the reproducing arrangement of the PCM transmitting arrangement in which the sample values are present as discrete amplitude values.

5. Circuit arrangement for carrying out the process according to Claim 1, characterized in that, the combination of preceding and succeeding undistorted sample values occurs in a summing amplifier (10), which has inputs of different sensitivity (11, 12, 13) to which are applied selectively the preceding and the succeesing undistorted sample values.

6. Circuit arrangement according to Claim 5, characterized in that, the summing amplifier has three inputs of which the sensitivities stand in the ratio 1 : 2 : 3.

7. Circuit arrangement according to Claim 5, characterized in that, the summing amplifier (10) comprises an operational amplifier, the inverting input of which is connected via three resistances having the values 2R, 3R, 6R with the three inputs of different sensitivities.

8. Circuit arrangement according to Claim 7, characterized in that, the feedback coupling resistance (15) of the operational amplifier has the value R, so that on the parallel connection of the resistances 2R, 3R and 6R, the overall gain of the summing amplifier has the value $-1$. ·

9. Circuit arrangement for carrying out the process according to Claim 1, characterized in that, the last sample value, at a particular time, which is either the last undistorted sample value or the last corrected sample value, is fed to a first store (20, 21) so that it is available during the succeeding sampling interval.

10. Circuit arrangement according to Claim 9, characterized in that, the first store (20, 21) is formed from a parallel combination of two sample and hold elements which are operated in opposite mode.

11. Circuit arrangement according to Claims 5 and 9, characterized in that, there is provided between the summing amplifier (10) and the first store (20, 21) a phase inverting stage (22) having adjustable gain (24) and offset means (26).

12. Circuit arrangement according to Claim 5, characterized in that, connected in front of the inputs of different sensitivity there are switches (16, 17, 18) to the first input of which at a particular time is applied the next undistorted sample value and to the second input of which at a particular time is applied the last sample value coming from the first store (20, 21).

13. Circuit arrangement according to Claim 12, characterized in that, the next undistorted sample value is derived from a second store (1), if need be by way of a digital-to-analogue converter, said second store being controlled in such a way that, as far as possible, an undistorted data word appears at its output.

14. Circuit arrangement according to Claim 13, characterized in that, the data words corresponding to the sample values are read into the second store (1) with a read-in timing $(T_1)$ and are presented at the output of the second store (1) with a read-out timing $(T_3)$, the read-out timing being influenced by whatever error markers (F) are present for individual data words in such a way that upon the occurrence of distorted data, the second store (1) is stepped forward until an undistorted data word appears at the output of the second store (1) or until a predetermined maximum number of forward steps is reached.

15. Circuit arrangement for carrying out the process according to claim 2, characterized in that, the control signals $(M_1, M_2, M_3)$ control the switches (16, 17, 18) in such a way that the weights of the sample values applied to the switches (16, 17, 18) stand in the ratio of 0 : 6, 1 : 5, 2 : 4, 3 : 3, 4 : 2, 5 : 1 or 6 : 0.

16. Circuit arrangement according to Claim 15, characterized in that, the ratio of the contribution of the next following undistorted sample value to the contribution of the last sample value is 3 : 3 in the case of one distorted sample value ; is 2 : 4 for the first distorted sample value in the case of two distorted sample values and 3 : 3 for the second ; is 2 : 4 for the first distorted sample value in the case of three distorted sample values, 2 : 4 for the second and 3 : 3 for the third ; is 1 : 5 for the first distorted sample value in the case of four distorted sample values, 2 : 4 for the second, 2 : 4 for the third and 3 : 3 for the fourth.

17. Circuit arrangement for carrying out the process according to Claim 2, characterized in that, a forward and reverse counter (42) is provided which counts the number of distorted data words and depending on the number of sample values still to be corrected produces, if need be by way of gates, the control signals $(M_1, M_2, M_3)$ for switching over the switches (16, 17, 18).

18. Circuit arrangement according to Claim 13, characterized in that, in order to ascertain the next undistorted data word, a control signal $(T_3)$ is produced to cause the second store (1) to step forward by as many places as the encountered number of successive distorted data words, the arrangement being such that no more than 4 successive distorted data words are detected, and the maximal stepping forward of the second store (1) occurs in a time which lies between two sample values to be applied to the output.

19. Circuit arrangement for carrying out the method according to Claim 1, characterized in that, the two sample values of the right and left channels of a stereophonic signal constitute a data word.

20. Circuit arrangement according to Claim 19, characterized in that, two stereo signals are associated together in a quadro signal.

21. Circuit arrangement according to the Claims 10 and 19, characterized in that, in order to handle a stereo signal two stores with respectively two sample and hold circuits (20, 21) are associated in the multiplex drive.

22. Circuit arrangement according to the Claims 2 and 9, characterized in that, correcting circuit (8), first store (20, 21) and summing amplifier (19) are put together in a common integrated circuit.

23. Circuit arrangement according to Claim 22, characterized in that, the integrated circuit is realised using CCD-technology.

**Revendications**

1. Procédé de correction d'échantillons erronés dans un dispositif de transmission MIC, et en particulier un disque audionumérique, dans lequel des échantillons erronés sont corrigés par une interpolation linéaire entre des échantillons voisins en avance et en retard, ledit procédé étant caractérisé en ce que :

a) en présence de quelques échantillons erronés successifs (N ≤ n), ces derniers sont remplacés par pondération de l'échantillon non erroné précédent (37, 38, 40) ou de l'échantillon précédemment corrigé (35) et de l'échantillon non erroné immédiatement suivant (36, 39, 41) puis combinaison des échantillons non erronés pondérés, de façon à obtenir une interpolation sensiblement linéaire de n échantillons erronés successifs au maximum entre les échantillons non erronés (figures 4a à 4d) ; et

b) en présence d'autres échantillons erronés successifs (N > n), les (N − n) premiers échantillons erronés sont remplacés par le dernier échantillon non erroné, qui peut aussi s'annuler dans le cas de longues séquences d'erreurs, et les (n) échantillons restants sont remplacés par une interpolation sensiblement linéaire entre le dernier échantillon corrigé et l'échantillon non erroné immédiatement suivant, selon la phase a) du procédé (figures 4e et 4f).

2. Procédé selon revendication 1, caractérisé en ce qu'un marquage d'erreur (F), lié aux mots-donnée des échantillons erronés, est transmis à un montage de commande de correction (8) qui, en fonction du nombre de marquages d'erreur (F) successifs, délivre des signaux de commande ($M_1$, $M_2$, $M_3$) pour l'ajustement de la pondération des échantillons aux diverses entrées d'un amplificateur sommateur (10), présentant une sensibilité différente (figures 1 et 2).

3. Procédé selon revendication 1, caractérisé en ce que quatre échantillons erronés successifs au maximum (n = 4) peuvent être remplacés selon la phase a) du procédé.

4. Montage pour la mise en œuvre du procédé selon revendication 1 dans un dispositif de transmission MIC, caractérisé en ce que l'interpolation est effectuée dans la partie du dispositif de lecture du dispositif de transmission MIC où les échantillons apparaissent sous forme d'amplitudes discrètes.

5. Montage pour la mise en œuvre du procédé selon revendication 1, caractérisé en ce que la combinaison des échantillons non erronés précédent et suivant s'effectue dans un amplificateur sommateur (10) aux entrées à sensibilité différente (11, 12, 13) duquel sont appliqués au choix les échantillons non erronés précédent et suivant.

6. Montage selon revendication 5, caractérisé en ce que l'amplificateur sommateur (10) comporte trois entrées dont les sensibilités sont dans le rapport de 1/2/3.

7. Montage selon revendication 5, caractérisé en ce que l'amplificateur sommateur (10) comprend un amplificateur opérationnel, dont l'entrée inverseuse est reliée par trois résistances 2R, 3R, 6R aux trois entrées de sensibilité différente.

8. Montage selon revendication 7, caractérisé en ce que la résistance de réaction (15) de l'amplificateur opérationnel est R, de sorte que le gain total de l'amplificateur sommateur est de − 1 lors du couplage en parallèle des résistances 2R, 3R et 6R.

9. Montage pour la mise en œuvre du procédé selon revendication 1, caractérisé en ce que le dernier échantillon, qui est soit le dernier échantillon non erroné, soit le dernier échantillon corrigé, est appliqué à une première mémoire (20, 21), de sorte qu'il est disponible pendant l'intervalle d'échantillonnage suivant.

10. Montage selon revendication 9, caractérisé en ce que la première mémoire (20, 21) est constituée par le couplage en parallèle de deux circuits intégrés d'échantillonnage et de maintien, à fonctionnement symétrique.

11. Montage selon revendications 5 et 9, caractérisé en ce qu'un étage inverseur de phase (22), comportant un gain ajustable (24) et un décalage ajustable (26), est inséré entre l'amplificateur sommateur (10) et la première mémoire (20, 21).

12. Montage selon revendication 5, caractérisé par le branchement en amont des entrées à sensibilité différente d'inverseurs (16, 17, 18), dont la première entrée reçoit l'échantillon non erroné suivant et dont la seconde entrée reçoit le dernier échantillon provenant de la première mémoire (20, 21).

13. Montage selon revendication 12, caractérisé en ce que l'échantillon non erroné suivant est prélevé, le cas échéant par l'intermédiaire d'un convertisseur numérique-analogique, dans une seconde mémoire (1) qui est commandée de façon à délivrer dans la mesure du possible un mot-donnée non erroné à sa sortie.

14. Montage selon revendication 13, caractérisé en ce que les mots-donnée correspondant aux échantillons sont introduits dans la seconde mémoire (1) par une fréquence d'entrée ($T_1$) et appliqués à la sortie de la seconde mémoire (1) par une fréquence de sortie ($T_3$), qui est commandée par d'éventuels marquages d'erreur (F) des divers mots-donnée de façon qu'en présence de données erronées, la seconde mémoire (1) soit commutée jusqu'à ce qu'un mot-donnée non erroné apparaisse à la sortie de ladite mémoire (1) ou qu'un nombre maximal prédéterminé de commutations soit atteint.

15. Montage pour la mise en œuvre du procédé selon revendication 2, caractérisé en ce que les signaux de commande ($M_1$, $M_2$, $M_3$) commandent des inverseurs (16, 17, 18) de façon que les rapports de pondération des échantillons appliqués auxdits inverseurs (16, 17, 18) soient de 0/6, 1/5, 2/4, 3/3, 4/2, 5/1 ou 6/0.

16. Montage selon revendication 15, caractérisé en ce que le rapport de la partie de l'échantillon non erroné suivant à la partie du dernier échantillon soit de 3/3 pour un échantillon erroné ; de 2/4 pour le premier échantillon erroné et de 3/3 pour le second échantillon erroné, dans le cas de deux échantillons erronés ; de 2/4 pour le premier échantillon erroné, de 2/4 pour le second échantillon erroné et de 3/3 pour le troisième échantillon erroné dans le cas de trois échantillons erronés ; de 1/5 pour le premier échantillon erroné, de 2/4 pour le second échantillon erroné, de 2/4 pour le troisième échantillon erroné et de 3/3 pour le quatrième échantillon erroné dans le cas de quatre échantillons erronés.

17. Montage pour la mise en œuvre du procédé selon revendication 2, caractérisé par un compteur bidirectionnel (42), qui compte le nombre de mots-donnée erronés et délivre les signaux de commande ($M_1$, $M_2$, $M_3$) de basculement des inverseurs (16, 17, 18) en fonction du nombre d'échantillons encore à corriger et le cas échéant par l'intermédiaire d'opérateurs.

18. Montage selon revendication 13, caractérisé en ce que pour la détermination du mot-donnée non

**0 044 963**

erroné suivant, un signal de commande (T$_3$) pour commutation de la seconde mémoire (1), avec un décalage égal au nombre de mots-donnée erronés successifs, dont quatre au maximum sont pris en considération, et la commutation de la seconde mémoire (1) s'effectue dans un temps maximal, compris entre deux échantillons à délivrer à la sortie.

19. Montage pour la mise en œuvre du procédé selon revendication 1, caractérisé en ce que les deux échantillons des voies droite et gauche d'un signal stéréophonique forment un mot-donnée.

20. Montage selon revendication 19, caractérisé par la réunion de deux signaux stéréophoniques en un signal quadriphonique.

21. Montage selon revendications 10 et 19, caractérisé en ce que deux mémoires comportant deux chacune deux circuits d'échantillonnage et de maintien (20, 21) sont réunies en multiplex pour le traitement d'un signal stéréophonique.

22. Montage selon revendications 2 et 9, caractérisé en ce que le montage correcteur (8), la première mémoire (20, 21) et l'amplificateur sommateur (10) sont réunis dans un circuit intégré commun.

23. Montage selon revendication 22, caractérisé en ce que le circuit intégré est réalisé en technologie CCD.

11

Fig.1

Fig. 2

Fig. 3

Fig. 4

Fig.5

$Q_A$

$Q_B$

$Q_C = M_2$

$M_3$

44
($M_4$)

$M_1$
45

$\overline{M_1}$

42
Vor / Rück
Zähler
(74LS193)

Rück

Vor

$T_3$

$\overline{m_1}$

43

$T_2$

F

m

T$_2$

m

F

Rück

Vor

Q$_A$

Q$_B$

Q$_C$=M$_2$

$\overline{M_1}$

(M$_4$)

T$_3$

M$_1$   1   1   1   1   1

M$_2$   1   1   1   0   0

M$_3$   1   1   0   1   1

Fig.6

Fig.7

Fig. 8